# EUROPÄISCHE PATENTSCHRIFT

(11) **EP 2 295 147 B1**
(45) Veröffentlichungstag und Bekanntmachung des Hinweises auf die Patenterteilung: **04.01.2012**
(21) Anmeldenummer: 09011589.0
(22) Anmeldetag: 10.09.2009
(51) Int. Cl.: B02C 15/00

(54) **Mühlenantriebssystem**
Mill drive system
Système d'entraînement de moulin

(43) Veröffentlichungstag der Anmeldung: 16.03.2011
(73) Patentinhaber: SIEMENS AKTIENGESELLSCHAFT, 80333 München (DE)
(72) Erfinder: Pötter, Friedhelm, 59192 Bergkamen (DE); Ridder, Joachim, 46399 Bocholt (DE)

(56) Entgegenhaltungen:
- WO-A1-2008/031694
- WO-A1-2009/068484
- DE-A1- 10 305 915

## Beschreibung

Bekannte Mühlenantriebssysteme umfassen eine oder mehrere Getriebestufen zur Antriebsleistungswandlung eines Elektromotors. Getriebestufen und Elektromotor bilden dabei einen eng an einen Verarbeitungsprozeß innerhalb z.B. einer Schüsselmühle, einer Mischtrommel, eines Brechers, einer Rohrmühle oder eines Drehrohrofens gekoppelten Antriebsstrang, der erheblichen Rückwirkungen des verarbeitungsprozesses ausgesetzt ist. Üblicherweise werden Kegelradstufen zur Anbindung des Elektromotors an den Antriebsstrang verwendet.

In DE 39 31 116 A1 ist eine-Antriebsvorrichtung für eine Mühle in Vertikalbauweise beschrieben, bei der ein Gehäuse eines Vorsatzgetriebes fest mit der Mühle verschraubt ist. Hierbei ist eine exakte Ausrichtung von weit auseinander liegenden Achsen von Antriebsritzel und Zahnkranz erforderlich. Darüber hinaus bewirkt eine Einleitung axialer Mühlenkräfte über ein Axial-Drucklager in ein gemeinsames Getriebegehäuse erhebliche Belastungen für einen Verzahnungseingriff im Vorsatzgetriebe. Durch einen gemeinsamen großen Getriebe- und Mühlenlagerinnenraum wird eine schnelle Verschmutzung von Schmieröl für die Antriebsvorrichtung begünstigt. Außerdem erweist sich eine mechanische Leistungsverzweigung im Vorsatzgetriebe angesichts einer fehlenden Kompensation überzähliger Zwangskräfte als problematisch.

Aus JP 2005 052799 A ist eine Antriebsvorrichtung für einen vertikalen Brecher bekannt, der entweder über einen Zahnkranz an einer drehbaren Bodenscheibe oder über ein mehrstufiges Kegelradgetriebe angetrieben wird. Bedingt durch eine fehlende Einstellbeweglichkeit an einer Abtriebsstufe der Antriebsvorrichtung werden Stoßbelastungen aus dem Verarbeitungsprozeß in die Antriebsvorrichtung übertragen, insbesondere in deren Verzahnung.

In WO 2009/068484 A1 ist ein Stirnradgetriebe mit einer oder mehreren Getriebestufen zum Antrieb einer von einem Zahnkranz umschlossenen Arbeitsmaschine beschrieben, das ein die Getriebestufen aufnehmendes Getriebegehäuse und ein auf einer Abtriebswelle einer Abtriebsstufe angeordnetes, einstellbewegliches Zahnritzel umfaßt, das mit dem Zahnkranz kämmt. Das Getriebegehäuse besteht aus einem ersten in sich steifen Gehäuseteil und aus einem zweiten starren Gehäuseteil. Der erste Gehäuseteil umschließt die Abtriebsstufe mit der Abtriebswelle und dem einstellbeweglichen Zahnritzel und weist das Getriebe überragende Seitenwände auf, die auf dem Fundament aufrauhen. Der zweite Gehäuseteil ist ohne Berührung mit dem Fundament an einer Stirnseite an dem ersten Gehäuseteil befestigt.

Aus WO 2008/031694 A1 ist ein Mühlenantriebssystem mit einem unterhalb eines Mahltellers anordenbaren Getriebe bekannt. Das Getriebe umfaßt zumindest eine Planetenstufe und weist eine vertikale Wellenlage auf. In ein Gehäuse des Getriebes ist ein elektrischer Motor integriert, der an einen Schmierstoffversorgungskreislauf des Getriebes angeschlossen ist, dessen Rotor und Stator sich vertikal erstreckende Achsen aufweisen und dessen Kühlung mittels durch das Getriebe zirkulierenden Schmierstoffs erfolgt.

Problematisch bei bestehenden Mühlenantriebssystemen sind Kurzunterbrechungen im Antriebsstrang infolge z.B. eines Energieversorgungsausfalls, die verzahnungsschädigende Drehmomentspitzen hervorrufen können, die ein Vielfaches eines Getriebenenndrehmoments betragen können.

Der vorliegenden Erfindung liegt daher die Aufgabe zugrunde, ein Mühlenantriebssystem zu schaffen, das eine Vermeidung von Getriebeschäden durch Kurzunterbrechungen im Antriebsstrang und einen verschleißarmen Betrieb ermöglicht.

Erfindungsgemäß wird diese Aufgabe durch ein Mühlenantriebssystem mit den in Anspruch 1 angegebenen

Merkmalen gelöst. Vorteilhafte Weiterbildungen der vorliegenden Erfindung sind in den abhängigen Ansprüchen angegeben.

Das erfindungsgemäße Mühlenantriebssystem umfaßt ein unterhalb eines Mahltellers anordenbares Getriebe mit zumindest einer Planeten- und/oder Stirnradstufe, das eine vertikale Wellenlage aufweist. Außerdem ist in ein Gehäuse des Getriebes ein elektrischer Motor integriert, der an einen Schmierstoffversorgungskreislauf des Getriebes angeschlossen ist. Rotor und Stator des Motors weisen sich vertikal erstreckende Achsen auf. Eine Kühlung des Motors erfolgt mittels durch das Getriebe zirkulierenden Schmierstoffs. Darüber hinaus ist eine schmieröldichte Ummantelung für Rotor- bzw. Statorwicklungen des Motors zur Abdichtung gegenüber innerhalb des Gehäuses zirkulierendem Schmierstoff vorgesehen. Des weiteren umfaßt das erfindungsgemäße Mühlenantriebssystem einen Umrichter mit einer zugeordneten Regelungseinrichtung zur verzahnungsspielfreien Drehzahlregelung des Motors.

Aufgrund einer Integration des Motors in den Schmierstoffkreislauf des Getriebes kann auf aufwendige Belüftungsmaßnahmen zur ausreichenden Kühlung des Motors verzichtet werden. Durch Verwendung eines Umrichters zur Mötordiehzahlregelung wird Entkopplung zwischen Netzversorgung und Motordrehmoment erzielt. Auf diese Weise können Verzahnungsschäden bei Kurzunterbrechungen infolge eines Netzausfalls vermieden werden, da durch einen Netzausfall aufgrund der erfindungsgemäßen Drehzahlregelung des Motors kein Verzahnungsspiel in Drehrichtung im Getriebe hervorgerufen wird. Durch eine komplett vertikale Anordnung von Mahlteller, Getriebe und Motor ist außerdem ein Verzicht auf verhältnismäßig teuere Kegelradgetriebe möglich. Durch den Verzicht auf Kegelradgetriebe und eine Luftkühlung des Motors werden außerdem Geräuschemissionen deutlich reduziert.

Durch Verwendung eines Umrichters kann eine Vielzahl anwendungsspezifischer Übersetzungsvarianten bei reduzierter Anzahl von Verzahnungsbauteiletypen realisiert werden. Durch die Drehzahlregelung kann der jeweilige Verarbeitungsprozeß mit dem erfindungsgemäßen Mühlenantriebssystem darüber hinaus in einem optimalen Arbeitspunkt betrieben werden. Hierdurch wird die Effizienz des Mahlprozesses verbessert. Dies ermöglicht wiederum eine Energieverbrauchsreduktion.

Entsprechend einer bevorzugten Ausgestaltung der vorliegenden Erfindung sind Dichtungen nur noch an einem Abtriebsteller, an Schmierstoffversorgungsleitungen, an elektrischen Energieversorgungszuführungen und an zumindest einer Zuführung für eine Meßeinrichtung vorgesehen. Dies ermöglicht eine weitere Reduktion mechanischer Bauteile und trägt damit zu einer erhöhten Zuverlässigkeit bei.

Vorzugsweise ist in einem Rotorträger zumindest eine sich axial erstreckende Öffnung für einen Schmierstoffablauf vom Getriebe in einen Schmierstoffsammelbereich oder -behälter vorgesehen. Derartige Öffnungen können auch zur Montage genutzt werden, indem beispielsweise 3 oder 4 Führungsschienen in die Öffnungen im Rotorträger eingeführt werden, durch die der Rotorträger bei der Montage geführt wird. Mittels Verfahrschlitten auf den Führungsschienen kann der Rotor zur Zielposition verfahren und dort fixiert werden. Entsprechend einer alternativen Ausführung der vorliegenden Erfindung kann das Gehäuse des Getriebes geteilt sein, oder der Motor auf einem herausnehmbaren Getriebeboden montiert sein. Alternativ hierzu kann der Motor durch eine Öffnung im Getriebeboden eingeführt und am Gehäuse des Getriebes - anstelle auf dem Getriebeboden - befestigt sein.

Entsprechend einer vorteilhaften Weiterbildung der vorliegenden Erfindung ist der Motor eine permanenterregte Synchronmaschine ist, deren Rotor-Magnetsystem in einen Edelstahlmantel eingeschweißt ist. Da am Rotor auf diese Weise keine thermischen Verluste entstehen, ist keine Rotorkühlung erforderlich. Alternativ zu einer permanenterregten Synchronmaschine kann der Motor auch als Kurzschlußläufermaschine ausgestaltet sein.

Die vorliegende Erfindung wird nachfolgend an einem Ausführungsbeispiel anhand der Zeichnung näher erläutert. Es zeigt
- Figur 1: ein erfindungsgemäßes Mühlenantxzebssystem in einer Schnittdarstellung
- Figur 2: eine schematische Darstellung eines elektrischen Motor des Mühlenantriebssystem gemäß Figur 1 in ei- ner Draufsicht.

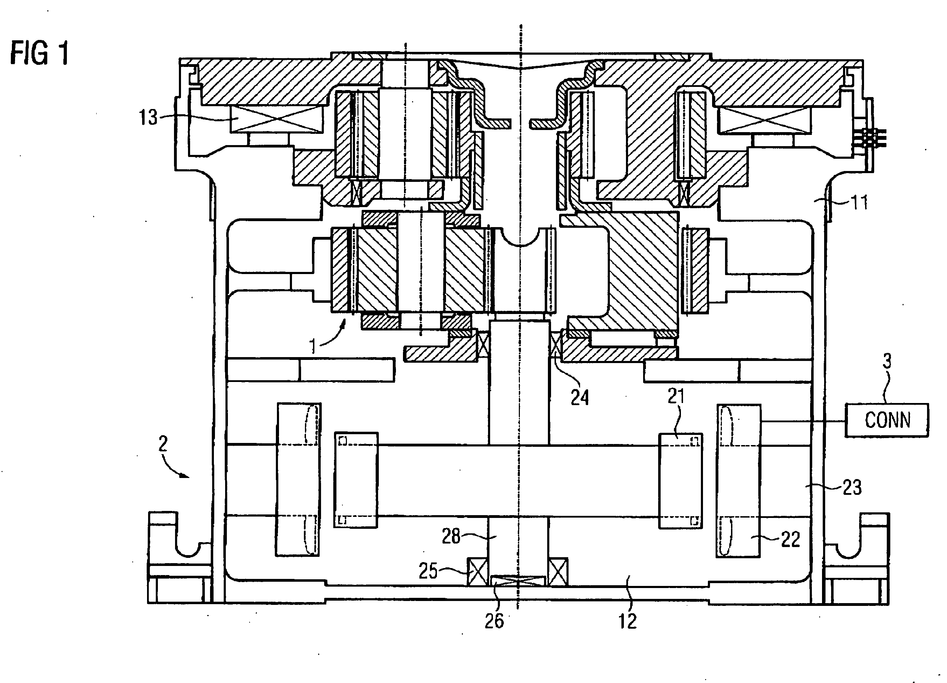

Das in Figur 1 dargestellte Mühlenantriebssystem umfaßt ein unterhalb eines Mahltellers angeordnetes Getriebe 1 mit zwei Planetenstufen. Sowohl antriebsseitigen Planetenstufe als auch abtriebsseitige Planetenstufe weisen eine vertikale Wellenlage auf. Beide Planetenstufen umfassen jeweils ein Hohlrad, einen Planetenträger mit darin gelagerten Planetenrädern und ein Sonnenrad. Die Hohlräder der Planetenstufen sind fest mit einem Getriebegehäuse 11 verbunden. Der Planetenträger der abtriebsseitigen Planetenstufe ist mit dem Mahlteller verbindbar und mittels eines Axiallagers 13 gelagert. Das Sonnenrad der antriebsseitigen Planetenstufe ist mit einer Rotorwelle 28 eines in das Getriebegehäuse 11 integrierten elektrischen Motors 2 verbunden, der einen Rotor 21 und einen diesen radial umgebenden Stator 22 umfaßt. Rotor 21 und Stator 22 weisen sich vertikal erstreckende Achsen auf.

Die Rotorwelle 28 ist mittels eines zwischen Motor 2 und Getriebe 1 angeordneten Radiallagers 24, eines unterhalb der Motors 2 in einem Schmierstoffsumpf 12 angeordneten Radiallagers 25 sowie eines ebenfalls unterhalb der Motors 2 angeordneten Axiallagers 26 gelagert. Auf diese Weise ist bei einer relativ kurzen Rotorwelle 28 eine sehr gute Zentrierung des Rotors 21 möglich. Rotorwelle 28 und Sonnenrad der antriebsseitigen Planetenstufe sind vorzugsweise über eine unterhalb oder oberhalb des Motors 2 angeordnete Kupplung verbunden. Darüber hinaus sind im vorliegenden Ausführungsbeispiel der Planetenträger der antriebsseitigen Planetenstufe und das Sonnenrad der abtriebsseitigen Planetenstufe miteinander verbunden.

Der Motor 2 ist an einen Schmierstoffversorgungskreislauf des Getriebes 1 angeschlossen, bei dem Schmierstoff aus dem schmierstoffsumpf 12 zu Schmierungsstellen im Getriebe 1 gepumpt wird und von dort über den Motor 2 in den Schmierstoffsumpf 12 abläuft. Auf diese Weise erfolge eine Kühlung des Motors 2 mittels durch das Getriebe 1 zirkulierenden Schmierstoffs. Zumindest ein in den Figuren nicht explizit dargestellter Schmierstoffversorgungskanal ist hierbei zu Statorkühlblechen 23 geführt, das mit durch das Getriebe 1 zirkulierendem Schmierstoff anströmbar ist. Zusätzlich kann gezielt Schmieröl zur Kühlung des Stators 22 angesprüht werden, das durch Kühleinrichtungen des Stators 22 gefördert wird.

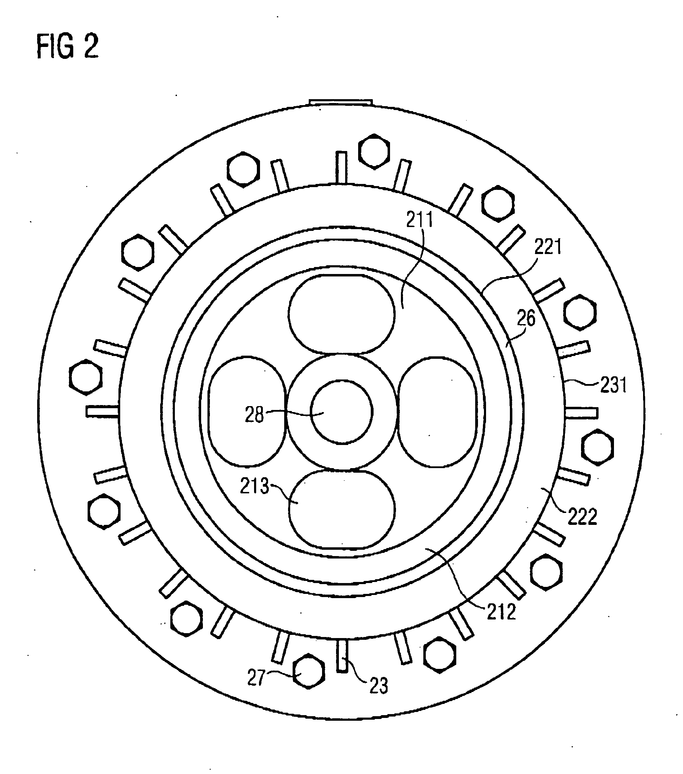

Anhand von Figur 2 ist erkennbar, daß an einem Rotorträger 211 eine schmieröldichte Ummantelung 212 des Rotors 21 zur Abdichtung gegenüber innerhalb des Gehäuses zirkulierendem Schmierstoff vorgesehen ist. In entsprechender Weise schließt sich an einen Luftspalt 26 zwischen Rotor 21 und Stator 22 in radialer Richtung eine schmieröldichte Ummantelung 221 eines Ständerblechpakets 222 an, das Wicklungen des Stators 22 umfaßt. Eine deutliche Vergrößerung des Luftspalts des Motors 2 ist nicht erforderlich, da dieser durch die schmieröldichten Ummantelungen lediglich eine geringe Vergrößerung erfährt.

Zur Kapselung des Stators 22 ist eine Hülse vorgesehen. Neben der Hülse weist der Stator 22 einen Klemmflansch, ein Klemmelement und eine elastische Abdichtung auf. Mit Hilfe des Klemmelementes wird ist die elastische Abdichtung auf den Klemmflansche und die Hülse gepreßt. Zur Kapselung des Stators 22 kann jedes geeignete Statorgehäuseteil verwendet werden, indem die elastische Abdichtung einen Druck durch eine Vorspannung auf dieses ausübt. Weitere Details zur Kapselung von Rotor 21 und Stator 22 sind der älteren deutschen Patentanmeldung DE 10 2009 034 158.7 zu entnehmen, deren Offenbarung hiermit referenziert wird.

Der Stator 22 ist entsprechend Figur 2 an seinem äußeren Umfang von Kühlflächen 231 umgeben, die ebenfalls mit Schmierstoff anströmbar sind und von denen sich die Statorkühlbleche 23 radial nach außen erstrecken. Außerdem sind am Stator 22 in Umfangsrichtung mehrere Befestigungspunkte 27 zur Verschraubung des Stators 22 mit dem Getriebegehäuse vorgesehen. Im Rotorträger 211 sind mehrere sich axial erstreckende Öffnungen 213 für einen Schmierstoffablauf vom Getriebe 1 in den Schmierstoffsumpf 12 vorgesehen, welche um die Rotorwelle 28 angeordnet sind. Des weiteren ist der Motor 2 im vorliegenden Ausführungsbeispiel eine permanenterregte Synchronmaschine, deren Rotor-Magnetsystem in einen Edelstahlmantel eingeschweißt ist. Dies ermöglicht besonders geringe elektrische Verluste.

Das in Figur 1 dargestellte Mühlenantriebssystem weist ferner einen Umrichter 3 mit einer zugeordneten Regelungseinrichtung zur verzahnungsspielfreien Drehzahlregelung des Motors 2 auf, so daß zwischen Zahnflanken des Getriebes 1 in Drehrichtung kein Spiel besteht. Mechanischen Eigenfrequenzen eines Mühle-Getriebe-Motor-Systems werden bei Verwendung des Umrichters 3 unkritisch infolge einer Systernkomponenten-Entkoppelung. Zahnflanken des Getriebes 1 werden dabei durch Aufschaltung eines Mindestdrehmoments unter ständigem Kraftschluß gehalten. Hierdurch werden richtungsändernde Belastungen der Zahnflanken weitgehend unterbunden.

Vorzugsweise ist ein Außendurchmesser des Motors 2 kleiner als ein Innendurchmesser der Hohlräder der Planetenstufen ist. Auf diese Weise ergibt sich ein fertigungstechnisch einfacher Aufbau des Mühlenantriebssystems. Alternativ dazu kann ein Außendurchmesser des Rotors 21 kleiner als der Innendurchmesser der Hohlräder und der Stator 22 aus mehreren sich in Umfangsrichtung erstreckenden Segmenten gefertigt sein.

Die Anwendung der vorliegenden Erfindung ist nicht auf das beschriebene Ausführungsbeispiel beschränkt.

## Patentansprüche

1. Mühlenantriebssystem mit
- einem unterhalb eines Mahltellers anordenbaren Getriebe mit zumindest einer Planeten- und/oder Stirnradstufe, das eine vertikale Wellenlage aufweist,
- einem in ein Gehäuse des Getriebes integrierten elektrischen Motor, der an einen Schmierstoffversorgungskreislauf des Getriebes angeschlossen ist, dessen Rotor und Stator sich vertikal erstreckende Achsen aufweisen und dessen Kühlung mittels durch das Getriebe zirkulierenden Schmierstoffs erfolgt,
**gekennzeichnet durch**
- eine schmieröldichte Ummantelung für Rotor- und/oder Statorwicklungen des Motors zur Abdichtung gegenüber innerhalb des Gehäuses zirkulierendem Schmierstoff,
- einen Umrichter mit einer zugeordneten Regelungseinrichtung zur verzahnungsspielfreien Drehzahlregelung des Motors.

2. Mühlenantriebssystem nach Anspruch 1, bei dem ein Schmierstoffversorgungskanal zu zumindest einem Statorkühlblech geführt ist, das mit durch das Getriebe zirkulierendem Schmierstoff anströmbar ist.

3. Mühlenantriebssystem nach einem der Ansprüche 1 oder 2, bei dem der Motor unterhalb des Getriebes angeordnet ist, und bei dem unterhalb des Motors ein Schmierstoffsammelbereich oder -behälter vorgesehen ist.

4. Mühlenantriebssystem nach Anspruch 3, bei dem in einem Rotorträger zumindest eine sich axial erstreckende Öffnung für einen Schmierstoffablauf vom Getriebe in den Schmierstoffsammelbereich oder -behälter vorgesehen ist.

5. Mühlenantriebssystem nach einem der Ansprüche 1 bis 4, bei dem Dichtungen nur an einem Abtriebsteller, an Schmierstoffversorgungsleitungen, an elektrischen Energieversorgungszuführungen und an zumindest einer Zuführung für eine Meßeinrichtung vorgesehen sind.

6. Mühlenantriebssystem nach einem der Ansprüche 1 bis 5, bei dem ein Außendurchmesser des Motors kleiner als ein Innendurchmesser eines Hohlrads der zumindest einen Planetenstufe ist.

7. Mühlenantriebssystem nach einem der Ansprüche 1 bis 5, bei dem ein Außendurchmesser des Rotors kleiner als ein Innendurchmesser eines Hohlrads der zumindest einen Planetenstufe ist, und bei dem der Stator aus mehreren sich in Umfangsrichtung erstreckenden Segmenten gefertigt ist.

8. Mühlenantriebssystem nach einem der Ansprüche 1 bis 7, bei dem der Motor eine permanenterregte Synchronmaschine ist, deren Rotor-Magnetsystem in einen Edelstahlmantel eingeschweißt ist.

## Claims

1. Mill drive system with
- a transmission which can be arranged beneath a milling table and has at least one planetary and/or spur gear stage as well as a vertical shaft position,
- an electric motor, which is integrated in a housing of the transmission and is connected to a lubricant supply circuit of the transmission and whose rotor and stator have vertically extending axes and which is cooled by means of lubricant circulating through the transmission,
- a lubricating-oil-proof sheath for rotor and/or stator windings of the motor for sealing with respect to lubricant circulating within the housing,
- a converter with an associated regulation device for backlash-free speed regulation of the motor.

2. Mill drive system according to Claim 1, in which a lubricant supply channel is passed to at least one stator cooling plate, against which lubricant circulating through the transmission can flow.

3. Mill drive system according to either of Claims 1 and 2, in which the motor is arranged beneath the transmission, and in which a lubricant collecting region or tank is provided beneath the motor.

4. Mill drive system according to Claim 3, in which at least one axially extending opening for a lubricant discharge from the transmission into the lubricant collecting region or tank is provided in a rotor mount.

5. Mill drive system according to one of Claims 1 to 4, in which seals are provided only on an output actuator, on lubricant supply lines, on electrical power supply lines and on at least one supply line for a measuring device.

6. Mill drive system according to one of Claims 1 to 5, in which an outer diameter of the motor is smaller than an inner diameter of a ring gear of the at least one planetary gear stage.

7. Mill drive system according to one of Claims 1 to 5, in which an outer diameter of the rotor is smaller than an inner diameter of a ring gear of the at least one planetary gear stage, and in which the stator is manufactured from a plurality of segments extending in the circumferential direction.

8. Mill drive system according to one of Claims 1 to 7, in which the motor is a permanent magnet synchronous machine, whose rotor magnet system has been welded into a stainless steel shell.

## Revendications

1. Système d'entraînement de broyeur comprenant
- un train d'engrenage pouvant être disposé en dessous d'un plateau de broyage et comprenant au moins un étage planétaire et/ou cylindrique qui a une position d'arbre verticale,
- un moteur électrique qui est intégré dans un carter du train d'engrenage, qui est raccordé à un circuit d'alimentation en lubrifiant du train d'engrenage et dont le rotor et le stator ont des axes s'étendant verticalement et dont le refroidissement s'effectue au moyen de lubrifiant circulant dans le train d'engrenage,
**caractérisé par**
- une enveloppe étanche au lubrifiant pour des enroulements rotoriques et/ou statoriques du moteur en vue d'assurer l'étanchéité par rapport à du lubrifiant circulant à l'intérieur du carter,
- un convertisseur ayant un dispositif associé de régulation pour la régulation de la vitesse de rotation du moteur sans jeu de denture.

2. Système d'entraînement de broyeur suivant la revendication 1,
dans lequel le canal d'alimentation en lubrifiant est guidé vers au moins une tôle de refroidissement de stator, à laquelle peut affluer du lubrifiant circulant dans le train d'engrenage.

3. Système d'entraînement de broyeur suivant l'une des revendications 1 ou 2,
dans lequel le moteur est disposé sous le train d'engrenage et dans lequel une zone de collecte de lubrifiant ou un récipient de collecte de lubrifiant est prévu en dessous du moteur.

4. Système d'entraînement de broyeur suivant la revendication 3,
dans lequel il est prévu dans un support de rotor au moins une ouverture s'étendant axialement pour une évacuation de lubrifiant du train d'engrenage dans la zone de collecte de lubrifiant ou dans le récipient de collecte du lubrifiant.

5. Système d'entraînement de broyeur suivant l'une des revendications 1 à 4,
dans lequel il est prévu des étanchéités seulement sur un plateau de sortie, sur des conduits d'alimentation en lubrifiant, sur des entrées d'alimentation en énergie électrique et sur au moins une entrée pour un dispositif de mesure.

6. Système d'entraînement de broyeur suivant l'une des revendications 1 à 5,
dans lequel un diamètre extérieur du moteur est plus petit qu'un diamètre intérieur d'une roue creuse du au moins un étage planétaire.

7. Système d'entraînement de broyeur suivant l'une des revendications 1 à 5,
dans lequel un diamètre extérieur du rotor est plus petit qu'un diamètre intérieur d'une roue creuse du au moins un étage planétaire et dans lequel un stator est fabriqué en plusieurs segments s'étendant dans la direction périphérique.

8. Système d'entraînement de broyeur suivant l'une des revendications 1 à 7,
dans lequel le moteur est un moteur synchrone à excitation permanente, dont le système rotor-aimant est soudé dans une enveloppe en acier fin.
